# EUROPEAN PATENT APPLICATION

(11) **EP 4 674 500 A1**
(43) Date of publication of application: **07.01.2026**
(21) Application number: 24185790.3
(22) Date of filing: 01.07.2024
(51) Int. Cl.: B01D 29/21

(54) **AN AIR FILTER CARTRIDGE**

(71) Applicant: VOLVO TRUCK CORPORATION, 405 08 Göteborg (SE)
(72) Inventor: EKSTRÖM, Nils, 431 40 MÖLNDAL (SE); BLANC, Xavier, 69680 CHASSIEU (FR)
(74) Representative: Kransell & Wennborg KB

(57) **Abstract**

An air filter cartridge (1002) comprising a filter body (1002a) and a threaded arrangement (1, 101, 201) for connection with a thread (20, 120, 220) of a filter housing (1003), the threaded arrangement (1, 101, 201) having a leading end (1a, 101a, 201a), a trailing end (1b, 101b, 201b) opposite to the leading end (1a, 101a, 201a) and at least a first thread (10, 110, 210) extending helically along a longitudinal axis (A) from the leading end (1a, 101a, 201a) to the trailing end (1b, 101b, 201b), the first thread having a crest (11, 111), a root (12, 112), a pitch (p), a thread height (H) extending in the direction from the root (12, 112) to the crest (11, 111), a leading flank (13, 113) facing the leading end (1a, 101a, 201a) for leading the connection, and a trailing flank (14, 114) facing the trailing end (1, 101b, 201b) and having a flat engagement portion (14', 114'), wherein a steepness of the flat engagement portion (14', 114') of the trailing flank (14, 114) with regards to the longitudinal axis (A) is smaller than an average steepness of the leading flank (13, 113) with regards to the longitudinal axis (A), the flat engagement portion (14', 114') extending along at least 65 % of the thread height (H) and being inclined (β) between 42° and 57°, preferably between 43° and 54°, more preferably between 45° and 51° with regards to the longitudinal axis (A).

## Description

### TECHNICAL FIELD

The disclosure relates generally to air filter systems. In particular aspects, the disclosure relates to an air filter cartridge. The disclosure can be applied to heavy-duty vehicles, such as trucks, buses, and construction equipment, among other vehicle types including marine vessels. Although the disclosure may be described with respect to a particular vehicle, the disclosure is not restricted to any particular vehicle.

### BACKGROUND

Vehicles equipped with a combustion engine comprise several filters which need to be changed during maintenance operations. These filters are usually contained in disposable cartridges, which are directly fixed to the combustion engine through a base, or placed in a bowl or a filter housing which is fixed to the engine. In most cases, the filter cartridge is threaded in such a way that it can be screwed onto, or into, the filter housing. Threaded connections are usually formed using metric ISO standard thread. Those standard thread connections allow the manual tightening of the filter cartridge to the filter housing. However, such standard thread connections are not adapted to resist high ripping-out forces. In case of prolonged internal pressure, or overpressure, or in case the filter cartridge is not properly tightened, then the filter cartridge can be ripped out and detached from the filter housing. Therefore, it is desirable to prevent unintentional rip out of the filter cartridge from the filter housing, while maintaining the easiness of the manual tightening. This is particularly true for an air filter cartridge or an air-dryer filter cartridge for compressed air systems of a truck. Given these challenges, there exists a need for an improved air filter cartridge and air filter system that addresses at least some of the limitations of current systems.

### SUMMARY

An object of the present invention is to at least partly overcome the above problems, and to provide an air filter cartridge which is improved compared to prior art solutions. The air filter cartridge comprises a filter body having a threaded arrangement for connection with a thread of a filter housing. The threaded arrangement has a leading end, a trailing end opposite to the leading end and at least a first thread extending helically along a longitudinal axis from the leading end to the trailing end. The first thread comprises a crest, a root, a pitch, a thread height extending in the direction from the root to the crest, a leading flank facing the leading end for leading the connection, and a trailing flank facing the trailing end and having a flat engagement portion. By arranging the first thread with a steepness of the flat engagement portion of the trailing flank which is smaller than an average steepness of the leading flank, a threaded structure which achieves a well-balanced distribution between shear forces (typically the radial force of the shear forces) and contact area is provided, as well as a tight sealing at the trailing flank when being subject to a pressure from the leading end to the trailing end, e.g. when the air filter cartridge is connected to a pressurized vessel, the pressurized vessel comprising or constituting the filter housing. Hence, the threaded arrangement provides for an advantageous thread design which may be used for attaching a disposable filter to a pressurized vessel, in particular an air filter cartridge to a filter housing. Typically, the flat engagement portion makes up a majority of the trailing flank, such as a substantial portion of the trailing flank, and therefore a satisfying contact area with the corresponding flank of the thread of the filter housing can be achieved when a pressure is applied from the leading end to the trailing end (e.g. a pressure, such as a prolonged internal pressure or overpressure, which otherwise may cause the air filter cartridge to be ripped out and detached from the filter housing). Hereby, the flat engagement portion being in contact with the corresponding flank of the thread of the filter housing is large enough for providing a strong thread, or at least a thread that does not prematurely break or prematurely wear out, and which provides a sufficient sealing between the filter housing and air filter cartridge. In other words, the stress induced by the radial force is balanced with the size of the flat engagement portion, or the associated contact area between the flat engagement portion and the corresponding flank of the thread of the filter housing. The flat engagement portion may e.g. make up at least 65 %, or at least 80 %, of the trailing flank. The steepness of the flat engagement portion of the trailing flank and the average steepness of the leading flank are referring to a corresponding inclination with regards to the longitudinal axis. That is, the average steepness of the leading flank may be correspondingly to the inclination, or average inclination, of the leading flank with regards to the longitudinal axis. Additionally or alternatively, the steepness of the flat engagement portion of the trailing flank may be correspondingly to the inclination of the flat engagement portion relative to the longitudinal axis. The air filter cartridge may e.g. be an air-dryer filter cartridge, and the filter housing an air-dryer filter housing.

According to a first aspect of the disclosure, an air filter cartridge comprising a filter body and a threaded arrangement for connection with a thread of a filter housing is provided. The threaded arrangement has a leading end, a trailing end opposite to the leading end and at least a first thread extending helically along a longitudinal axis from the leading end to the trailing end, the first thread having a crest, a root, a pitch, a thread height extending in the direction from the root to the crest, a leading flank facing the leading end for leading the connection, and a trailing flank facing the trailing end and having a flat engagement portion, wherein a steepness of the flat engagement portion of the trailing flank with regards to the longitudinal axis is smaller than an average steepness of the leading flank with regards to the longitudinal axis, the flat engagement portion extending along at least 65 % of the thread height and being inclined between 42° and 57°, preferably between 43° and 54°, more preferably between 45° and 51° with regards to the longitudinal axis. The first aspect of the disclosure may seek to overcome problems with unintentional detachment of the air filter cartridge from the filter housing (e.g. by the air filter cartridge being ripped out) while providing a tight sealing at the trailing flank when being subject to a pressure from the leading end to the trailing end. By the first aspect of the disclosure, an improved threaded arrangement is provided. Typically, the threaded arrangement may provide for a strong thread, or at least a thread that does not prematurely break or prematurely wear out, and which provides a sufficient sealing between the filter housing and air filter cartridge. In other words, the combination of having a flat engagement portion of the trailing flank which is less steep than the average steepness of the leading flank, and wherein the flat engagement portion is inclined by between 42° and 57°, preferably between 43° and 54°, more preferably between 45° and 51° with regards to the longitudinal axis, may provide for a threaded arrangement which achieves a well-balanced distribution with regards to at least the radial force of the shear forces (resulting in induced stresses in the thread) on one hand, and the size of the flat engagement portion or the associated the contact area between the flat engagement portion and the thread of the filter housing, on the other hand, while providing a tight sealing at the trailing flank when being subject to a pressure from the leading end to the trailing end. By providing a flat engagement portion extending along at least 65 % of the thread height, the flat engagement portion will make up a majority of the trailing flank, such as a substantial portion of the trailing flank. For example, the flat engagement portion may make up at least 65 % of the trailing flank, such as e.g. 80 % of the trailing flank. A technical benefit may include improved distribution with regards to shear forces (at least the radial force thereof) between the flat engagement portion of the first thread and the corresponding thread of the filter housing. Another technical benefit may include reduced wear of the threaded arrangement. Another technical benefit may include a tight sealing at the trailing flank when the air filter cartridge is subject to a pressure from the leading end to the trailing end, typically when the air filter cartridge is connected to filter housing of a pressurized vessel, e.g. an air-dryer housing. In other words, by the above mentioned design of the first thread, a satisfying size of the flat engagement portion, and hence associated contact area between the flat engagement portion of the trailing flank with the corresponding flank of the thread of the filter housing, when a pressure is applied from the leading end to the trailing end, is achieved. By arranging the first thread with a steepness of the flat engagement portion of the trailing flank which is smaller than an average steepness of the leading flank, the first thread is an asymmetrical thread with regards to the leading and trailing flanks.

Optionally in some examples, including in at least one preferred example, the flat engagement portion is inclined between 45° and 57°, preferably between 45° and 55°, more preferably between 46° and 50° or between 46° and 48° with regards to the longitudinal axis. A technical benefit may include further improved force distribution with regards to shear forces previously described.

Optionally in some examples, including in at least one preferred example, the root is defined as the first 10 % of the thread height and the crest is defined as the last 10 % of the thread height, wherein the trailing flank is defined to extend from the root to the crest along 80 % of the thread height. A technical benefit may include a satisfying size of the flat engagement portion and associated contact area between the flat engagement portion of the trailing flank with the corresponding flank of the thread of the filter housing, when a pressure is applied from the leading end to the trailing end. The thread height may e.g. be defined as height of the thread from the root to the crease. For example, the thread height may be defined as the distance, such as the largest distance, from the root to the crest. For example, the root, or root region, may make up the first 10 % of the thread height, typically from the lowest position of the root and extending 10 % along the thread in a direction of the thread height. Correspondingly, the crest, or crest region, may make up the last 10 % of the thread height, typically the last 10 % of the thread up to the highest position of the crest in a direction of the thread height. However, according to one alternative example, including in at least one preferred example, the trailing flank is defined to extend from the root to the crest along at least 80 %, such as along at least 90 %, such as along at least 95 % of the thread height. The direction of the thread height may be defined as being perpendicular to the longitudinal axis. For example, for a cross-section of the threaded arrangement along the longitudinal axis, the longitudinal axis may be defined as the y-axis in a two-dimensional Cartesian coordinate system, and the thread height to extend along the x-axis of the two-dimensional Cartesian coordinate system, wherein the y-axis and x-axis are orthogonal.

Optionally in some examples, including in at least one preferred example, a mid-point of the crest is arranged off-set from a position at 0.5 pitch by at least 0.05 pitch, preferably by at least 0.10 pitch. A technical benefit may include an advantageous asymmetrical structure of the first thread. The pitch may be defined as the distance from two adjacent crests or two adjacent roots, e.g. between corresponding locations of the two adjacent crests or adjacent roots. The position of the mid-point of the crest relative to the pitch may be defined with regards to a pitch extending from corresponding mid-points of the two roots surrounding the crest. Thus, a mid-point of the crest at a position at 0.5 pitch with regards to a pitch extending from corresponding mid-points of the two roots surrounding the crest corresponds to a symmetrically positioned crest (i.e. a crest which is symmetrical at least with regards to the position of said mid-point. By arranging the mid-point of the crest off-set with regards to the position at 0.5 pitch (i.e. for a pitch extending from corresponding mid-points of the two roots surrounding the crest correspond to a symmetrical crest), an asymmetrical structure for the first thread is achieved which facilitates the structure of having a less steep trailing flank compared to the average steepness of the leading flank. Optionally in some examples, including in at least one preferred example, a mid-point of the crest is arranged off-set from a position at 0.5 pitch by at least 0.15 pitch, preferably by at least 0.20 pitch.

Optionally in some examples, including in at least one preferred example, the flat engagement portion of the trailing flank has an axial extension of at least 0.30 pitch, preferably at least 0.35 pitch, more preferably at least 0.40 pitch. A technical benefit may include a satisfying size of the flat engagement portion and associated contact area between the flat engagement portion of the trailing flank with the corresponding flank of the thread of the filter housing, when a pressure is applied from the leading end to the trailing end. The axial extension is typically defined as extending along the longitudinal axis.

Optionally in some examples, including in at least one preferred example, the root and/or the crest are pointy. Optionally in some examples, including in at least one preferred example, the root and/or the crest are flat, or are "topped of'. For example, the crest may have an axial extension of at least 0.10 pitch, e.g. about 0.15 pitch and/or the root may have an axial extension of at least 0.15 pitch, e.g. about 0.30 pitch. Additionally or alternatively, the trailing flank may have an axial extension which is greater than an axial extension of the leading end, e.g. by at least 0.10 pitch.

Optionally in some examples, including in at least one preferred example, the leading flank has a first axial extension, the trailing flank has a second axial extension, the crest has a third axial extension and the root has a fourth axial extension, wherein the sum of the first, second, third and fourth axial extensions is equal to the pitch. As previously described, the pitch may be defined as the axial distance between two adjacent crests or two adjacent roots.

Optionally in some examples, including in at least one preferred example, the second axial extension is larger than the first axial extension. A technical benefit may include an advantageous structure for providing a flat engagement portion of the trailing flank which is less steep compared to the average steepness of the leading flank with regards to the longitudinal axis. Thus, as the axial extension of the trailing flank is greater than the axial extension of the leading flank, the flat engagement portion of the trailing flank is more easily made less steep than the average steepness of the leading flank with regards to the longitudinal axis. Optionally in some examples, including in at least one preferred example, the average steepness of the trailing flank is smaller than the average steepness of the leading flank. Stated differently, the steeper leading flank may have an axial extension which is smaller than the less steep trailing flank.

Optionally in some examples, including in at least one preferred example, the sum of the first axial extension, half of the third axial extension and half of the fourth axial extension is smaller than 0.5 pitch, preferably smaller than 0.45 pitch or smaller than 0.35 pitch and the sum of the second axial extension, half of the third axial extension and half of the fourth axial extension is larger than 0.5 pitch, preferably larger than 0.55 pitch or larger than 0.65 pitch. A technical benefit may include an advantageous distribution of the axial extension (with regards to the pitch) between the trailing flank and the leading flank. Hereby, an advantageous structure for providing a flat engagement portion of the trailing flank which is less steep compared to the average steepness of the leading flank with regards to the longitudinal axis may be achieved.

Optionally in some examples, including in at least one preferred example, the third axial extension is equal to or smaller than 0.25 pitch, preferably equal to or smaller than 0.15 pitch, and/or the fourth axial extension is equal to or smaller than 0.20 pitch, preferably equal to or smaller than 0.15 pitch. A technical benefit may include a well distributed axial extension between the trailing and leading flanks on one hand, and the axial extension of the crest and/or root on the other hand. In general, the crest may be referred to as the crest region and the root may be referred to as the root region.

Optionally in some examples, including in at least one preferred example, the average steepness of the leading flank is between 6° and 45°, preferably between 13° and 42°, more preferably between 20° and 39° steeper than the flat engagement portion of the trailing flank. A technical benefit may include further improved force distribution with regards to shear forces as previously described. For example, the average steepness of the leading flank is between 27° and 33° steeper than the flat engagement portion of the trailing flank.

Optionally in some examples, including in at least one preferred example, the leading flank extends from a first crest to a first root, and the trailing flank extends from the first crest to a second root trailing the first root in the axial direction, wherein the average steepness of the leading flank is determined from the first crest to the first root. Each one of the first crest and of the first and second roots may be defined as previously described.

Optionally in some examples, including in at least one preferred example, the average steepness of the leading flank is between 63° and 87°, preferably between 67° and 85°, more preferably between 71° and 81° with regards to the longitudinal axis. A technical benefit may include further improved force distribution with regards to shear as previously described. For example, the average steepness of the leading flank is between 75° and 79° with regards to the longitudinal axis.

Optionally in some examples, including in at least one preferred example, the flat engagement portion is inclined between 42° and 57° and the average steepness of the leading flank is between 63° and 87°, preferably the flat engagement portion is inclined between 43° and 54° and the average steepness of the leading flank is between 67° and 85°, more preferably the flat engagement portion is inclined between 45° and 51° and the average steepness of the leading flank is between 71° and 81°, with regards to the longitudinal axis. For example, the flat engagement portion is inclined between 46° and 48° or 50° and the average steepness of the leading flank is between 75° and 79°.

Optionally in some examples, including in at least one preferred example, the combined value of the inclination of the flat engagement portion of the trailing flank relative to the longitudinal axis and the inclination, or average inclination, of the leading flank relative to the longitudinal axis may be between 120° and 129°, preferably between 121° and 128° and more preferably between 122° and 126°, such as e.g. between 123° and 125°.

Optionally in some examples, including in at least one preferred example, the combined axial distance of the trailing flank and the leading flank (and optionally the crest and/or the root) is predetermined, and fixed, regardless of the steepness of the flat engagement portion and the average steepness of the leading flank.

Optionally in some examples, including in at least one preferred example, the flat engagement portion of the trailing flank forms an engagement surface for a corresponding flank of the thread of the filter housing. Thus, the corresponding flank of the thread of the filter housing is a corresponding flank to the trailing flank. The engagement surface may e.g. extend along the whole flat engagement portion. According to one example, the flat engagement portion makes up the whole trailing flank.

Optionally in some examples, including in at least one preferred example, the engagement surface of the trailing flank is configured to be brought into contact with the corresponding flank of the thread of the filter housing when the air filter cartridge is subject to a pressure in a direction from the leading end to the trailing end. Thus, the previously described engagement surface may be brought into contact with a corresponding surface of the thread of the filter housing upon a pressure in a direction from the leading end to the trailing end. Thus, the pressure is applied in an opposite direction to the direction leading the connection.

Optionally in some examples, including in at least one preferred example, the threaded arrangement is a multi-screw thread arrangement further comprising a second thread extending helically along the longitudinal axis from the leading end to the trailing end offset compared to the first thread, and wherein the second thread is correspondingly shaped to the first thread, or is shaped differently to the first thread. A technical benefit may include improved positioning of the air filter cartridge relative to the filter housing, e.g. resulting in a facilitated assembly process. The second thread may be offset relative to the first thread by a predefined value, e.g. by 180°. Thus, the start of the first and second threads may be offset by a correspondingly predefined value, e.g. by 180°. Hereby, the correct position for assembling the air filter cartridge to the filter housing may be improved (e.g. be made easier and/or faster). Hence, the assembly process may be enhanced with respect to time efficiency and user-friendliness.

Optionally in some examples, including in at least one preferred example, the second thread comprises a crest, a root, a pitch, a thread height extending in the direction from the root to the crest, a leading flank facing the leading end for leading the connection and having a flat contacting portion, and a trailing flank facing the trailing end, wherein a steepness of the flat contacting portion of the leading flank with regards to the longitudinal axis is smaller than an average steepness of the trailing flank with regards to the longitudinal axis, the flat contacting portion extending along at least 65 % of the thread height and being inclined between 42° and 57°, preferably between 43° and 54°, more preferably between 45° and 51° with regards to the longitudinal axis. Effects and features related to the second thread of the threaded arrangement are largely analogous to those described above in connection with the first thread, but for an applied pressure in the opposite direction to that described with reference to the first thread (i.e. for an applied pressure from the trailing end to the leading end). Hereby, the threaded arrangement is particularly suited for connection to low pressure vessels, e.g. with pressure variations, such as certain low pressure air filters and oil filter, Thus, for embodiments mentioned in relation to the first thread and with regards to the trailing flank, corresponding embodiments apply for the leading flank of the second thread, for embodiments mentioned in relation to the first thread and with regards to the leading flank, corresponding embodiments apply for the trailing flank of the second thread, and for embodiments mentioned in relation to the first thread and with regards to the flat engagement portion, corresponding embodiments apply for the flat contacting portion of the second thread.

According to a second aspect of the disclosure, an air filter system comprising a filter housing and an air filter cartridge according to the first aspect of the disclosure is provided. The second aspect of the disclosure may seek to solve the same problem as described for the first aspect of the disclosure. Thus, effects and features of the second aspect of the disclosure are largely analogous to those described above in connection with the first aspect of the disclosure. The filter housing is typically an air filter housing. Thus, the filter housing comprises a corresponding first thread configured to threadingly engage with the first thread of the air filter cartridge, and optionally a corresponding second thread configured to threadingly engage with the second thread of the air filter cartridge. Thus, the filter housing may comprise a single-screw threaded arrangement configured to threadingly engage with the single-screw threaded arrangement of the air filter cartridge, or the filter housing may comprise a multi-screw thread arrangement configured to threadingly engage with the multi-screw thread arrangement of the air filter cartridge.

Optionally in some examples, including in at least one preferred example, a play of 0.001 to 0.1 pitch is present at least between the first thread of the air filter cartridge and the thread of the filter housing. For example, the play my be present between the corresponding root and crest pair of the first thread of the air filter cartridge and the thread of the filter housing. It should be understood that when a pressure is applied from the leading end towards the trailing end, there is no play between the flat engagement portion of the trailing end of the air filter cartridge and the corresponding flank of the thread of the filter housing.

According to a third aspect of the disclosure, a vehicle comprising the air filter system of any the second aspect of the disclosure, or an air filter cartridge of the first aspect of the disclosure is provided. The third aspect of the disclosure may seek to solve the same problem as described for the first and second aspects of the disclosure. Thus, effects and features of the third aspect of the disclosure are largely analogous to those described above in connection with the first and second aspects of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary, partly schematic, side view of a vehicle comprising an air filter system according to one example.
**FIG. 2** is an exemplary, partly schematic, side view of the air filter system comprising an air filter cartridge and a filter housing of Fig. 1 according to one example.
**FIG. 3** is a cross-sectional view of a portion of threaded arrangements of the air filter cartridge and filter housing according to one example.
**FIG. 4** is a cross-sectional view of a portion of threaded arrangements of the air filter cartridge and filter housing according to one example.
**FIG. 5** is an exemplary, partly schematic, perspective view of a threaded arrangement of the air filter cartridge according to one example.
**FIG. 6** are cross-sectional views of portions of threaded arrangements of the air filter cartridge and filter housing according to one example.
**FIG. 7** are cross-sectional views of different examples of the threaded arrangement of the air filter cartridge.

### DETAILED DESCRIPTION

The detailed description set forth below provides information and examples of the disclosed technology with sufficient detail to enable those skilled in the art to practice the disclosure.

The disclosed technology may solve the problem related to unintentional detachment of the air filter cartridge from the filter housing. The disclosed technology provides an improved threaded arrangement in which the first thread is arranged to provide a well-balanced distribution of at least the radial force of the shear forces on one hand, and the size of the flat engagement portion, and associated contact area between the flat engagement portion and the thread of the filter housing, on the other hand. Typically, the threaded arrangement provides a flat engagement portion which is large enough for providing a strong thread, or at least a thread that does not prematurely break or prematurely wear out, and which provides a sufficient sealing between the filter housing and air filter cartridge. In other words, the combination of having a flat engagement portion of the trailing flank which is less steep than the average steepness of the leading flank, and wherein the flat engagement portion is inclined by between 42° and 57°, preferably between 43° and 54°, more preferably between 45° and 51° with regards to the longitudinal axis, a threaded arrangement which achieves a well-balanced distribution with regards to at least the radial force of the shear forces on one hand (and associated induced shear forces), and the contact area between the flat engagement portion and the thread of the filter housing on the other hand, may be provided. A technical benefit may include improved balance between the radial force of the shear forces and the size of the flat engagement portion (and associated contact area between the flat engagement portion and the thread of the filter housing). Another technical benefit may include reduced wear of the threaded arrangement. Another technical benefit may include a tight sealing at the trailing flank when the air filter cartridge is subject to a pressure from the leading end to the trailing end.

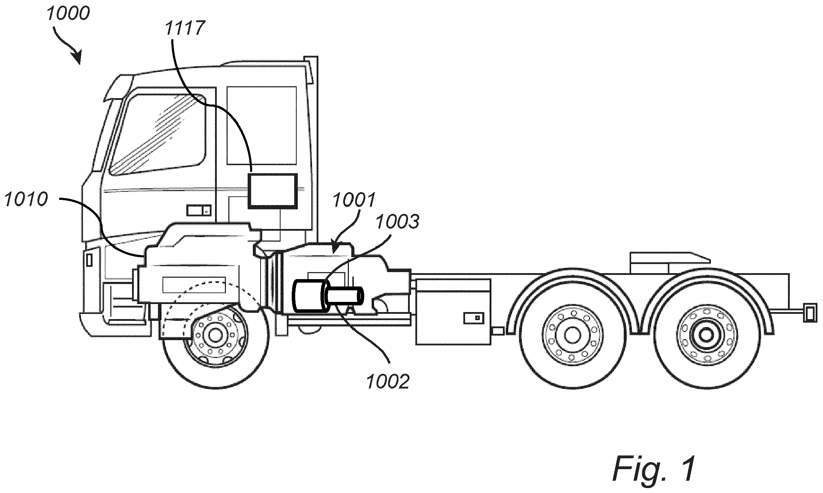

**FIG. 1** is an exemplary vehicle 1000, here embodied as a heavy duty truck 1000, according to one example. The vehicle 1000 comprises an internal combustion engine 1010, such as e.g. a hydrogen combustion engine or a diesel combustion engine, for propelling the vehicle 1000, and an air filter system 1001 for filtrating air. The air filter system 1001 comprises a filter housing 1003 and an air filter cartridge 1002. Typically, the air filter cartridge 1002 comprises an air filter that has to be changed during maintenance operations, and thus, the air filter cartridge 1002 is removably attached to the filter housing 1003 by corresponding threaded arrangements. The air filter system 1001 is only schematically shown in Fig. 1. It should be mentioned that the vehicle 1000 may be a hybrid vehicle further comprising an electric traction machine (optionally) for propelling the vehicle 1000. The internal combustion engine 1010 and the optional electric traction machine are typically arranged and configured to individually propel the vehicle 1000 by being separately coupled to other parts of the powertrain of the vehicle 1000, such as a transmission, drive shafts and wheels (not shown in detail). The operation of the internal combustion engine 1010 and the optional electric traction machine may be controlled by a control unit 1117, such as an ECU.

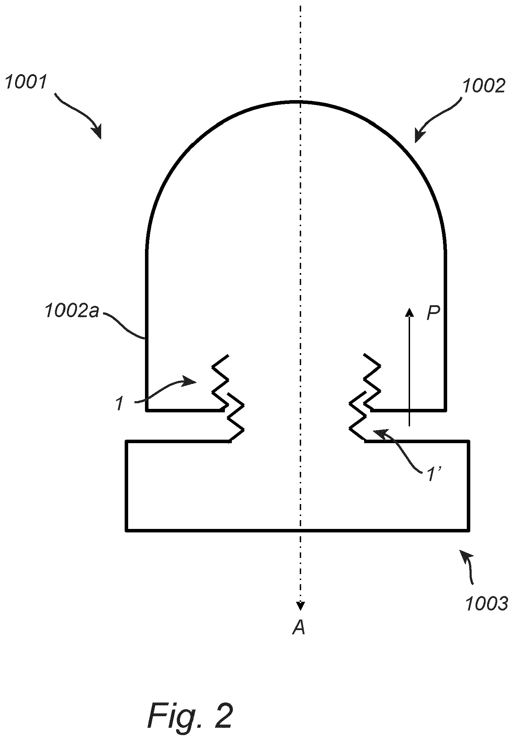

In **FIG. 2****,** the air filter system 1001 comprising the filter housing 1003 and the air filter cartridge 1002 is shown in greater detail. The air filter cartridge 1002 comprises a filter body 1002a and a threaded arrangement 1 for connection with a corresponding threaded arrangement 1' of the filter housing 1003. The filter body 1002a typically comprises a disposable air filter. The threaded arrangement 1 of air filter cartridge 1002 is configured to be threaded onto the threaded arrangement 1' of the filter housing 1003 following a longitudinal axis A, here also being a screwing axis. As also shown in Fig. 2, a pressure P (such as a prolonged internal pressure or overpressure), or any other corresponding ripping out forces, can be applied to the air filter cartridge 1002, resulting in a force directed inwardly from the filter housing 1003 towards the air filter cartridge 1002, risking the air filter cartridge 1002 to be ripped out and detached from the filter housing 1003.

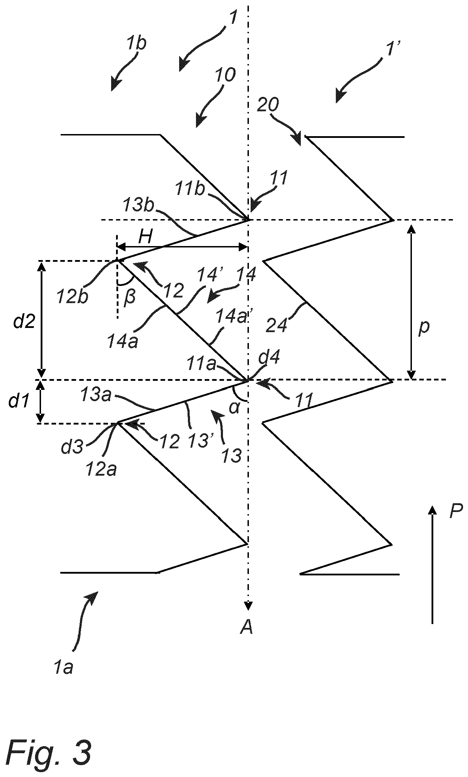

In **FIG. 3****,** a cross-sectional view of a portion of the threaded arrangement 1 of air filter cartridge 1002 and the threaded arrangement 1' of the filter housing 1003 are shown. The two threaded arrangements 1, 1' are shown separated from each other for increased comprehensibility.

The threaded arrangement 1 extends from a leading end 1a to a trailing end 1b arranged opposite to the leading end 1a. The threaded arrangement 1 comprises a first thread 10 extending helically along the longitudinal axis A from the leading end 1a to the trailing end 1b. The first thread 10 is configured to threadingly engage with a corresponding thread 20 (e.g. a corresponding first thread 20) of the threaded arrangement 1' of the filter housing 1003.

As shown in Fig. 3, the first thread 10 of the threaded arrangement 1 of the air filter cartridge 1002 is built up by structure including a crest 11, a root 12, a pitch p, a thread height H extending in the direction from the root 12 to the crest 11, a leading flank 13 facing the leading end 1a for leading the connection of the air filter cartridge 1002 to the filter housing 1003, and a trailing flank 14 facing the trailing end 1b. The trailing end has a flat engagement portion 14', which will be described in more detail later. In more detail, the first thread 10 comprises a first crest 11a, a first root 12a, a second crest 11b being adjacent the first crest 11a and trailing the first crest 11a in the axial direction (i.e. being arranged closer to the trailing end 1b as compared to the first crest 11a, and along the longitudinal axis), and a second root 12b adjacent the first root 12a and trailing the first root 12a. Correspondingly, a first leading flank 13a extends from the first crest 11a to the first root 12a, and a first trailing flank 14a extends from the first crest 11a to the second root 12b. Thus, the leading flank 13 leads the insertion of the first thread 10 relative to the thread 20 of the filer housing 1003 when the air filter cartridge 1002 is screwed onto the filter housing 1003.

The first thread 10 may be built up by consecutive leading flanks 13 and trailing flanks 14 corresponding to the described first leading and trailing flanks 13a, 14a. For example, as shown in Fig. 3, a second leading flank 13b extends from the second root 12a to the second crest 11b. In the example of Fig. 3, the pitch p is extending from first crest 11a to the second crest 11b. For simplicity, reference will be made to "the crest 11", the "root 12", "the leading flank 13" and "the trailing flank 14" in the following, indicating any one of, or all of, the corresponding crest 11, roots 12, leading flanks 13 and trailing flanks 14 of the thread 10, or at least indicating the first crest 11a, the first root 12a, the first leading flank 13a and the first trailing flank 14a, respectively.

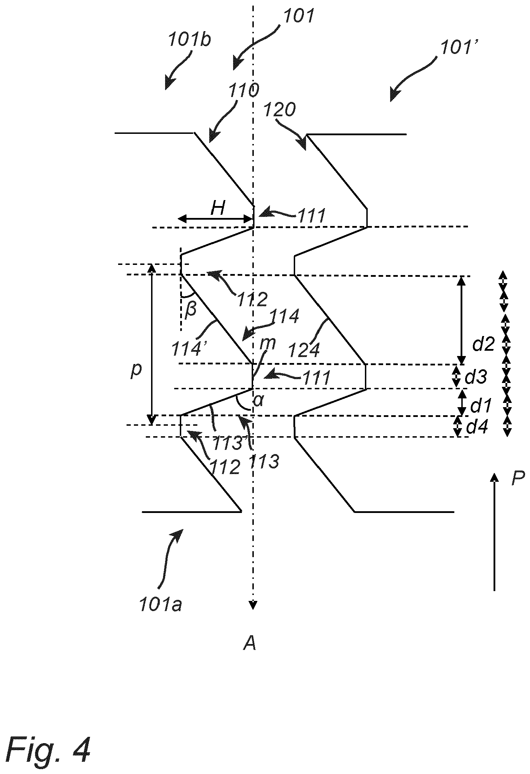

The root 12 may be referred to as a root region, and may e.g. be defined as the first 10 % of the thread height H. Correspondingly, the crest 11 may be referred to as a crest region, and may e.g. be defined as the last 10 % of the thread height H. Thus, the trailing flank 14 may be defined to extend from the root 12 to the crest 11 along 80 % of the thread height H. Correspondingly, the leading flank 14 may be defined to extend from the crest 11 to the root 12 along 80 % of the thread height H. As shown in Fig. 3, the crest 11 and the root 12 are pointy, with a minimum axial extension, but may be shaped differently, e.g. with associated flat portions extending along the longitudinal axis (as e.g. shown in Fig. 4). The crest and root may alternatively be curved, or comprise curved portions.

The pressure P described with reference to Fig. 2 is also shown in Fig. 3, indicated to extend in a direction from the leading end 1a to the trailing end 1b, typically along the longitudinal axis A (but opposite the direction of the threaded connection). When such pressure P is applied, the resulting force will bring the first thread 10 of the threaded arrangement 1 of the air filter cartridge 1002 into contact with the corresponding thread 20 of the threaded arrangement 1' of the filter housing 1003. Hereby, the flat engagement portion 14' of the trailing flank 14 will be brough into contact with a flank 24 of the thread 20 of the filter housing 1003 corresponding to that of the trailing flank 14. In more detail, the flat engagement portion 14' of the trailing flank 14 forms an engagement surface 14a' which will be brought into contact with the flank 24 of the filter housing 1003. Hereby, the threaded arrangements 1, 1' will seal the air filter cartridge 1002 to the filter housing 1003. However, if the pressure P is too high, e.g. above a predetermined threshold value, the resulting force may cause the first thread 10 to be ripped out of the engagement with the thread 20 of the filter housing 1003, whereby the air filter cartridge 1002 is unintentionally detached from the filter housing 1003. Thus, the flat engagement portion 14' configured to be in contact with the corresponding flank 24 of the filter housing 1003, should be large enough for providing a threaded engagement which is strong, to prevent the air filter cartridge 1002 from unintentionally detach from the filter housing 1003, and/or to prevent prematurely breakage or prematurely wearing out of the first thread 10, which also may result in unintentionally detachment of the air filter cartridge 1002 from the filter housing 1003.

Typically, resulting force of the applied pressure P to the air filter cartridge 1002 results in shear forces between the flat engagement portion 14' and the corresponding flank 24 of the filter housing 1003. The shear forces can be divided into a component in the axial direction (i.e. along the longitudinal axis A also referred to as a vertical force) and a component traverse the axial direction (i.e. in the radial direction along the thread height H), the latter being referred to as a radial force. In order to provide a satisfying sealing between the air filter cartridge 1002 and the filter housing 1003, and to avoid unintentionally detachment of the air filter cartridge 1002 from the filter housing 1003 as previously described, and providing a tight sealing at the trailing flank when being subject to a pressure from the leading end to the trailing end, these force components should be balanced, or at least be adapted with regards to each other.

As seen in Fig. 3, the steepness of the flat engagement portion 14' of the trailing flank 14 with regards to the longitudinal axis A is smaller than an average steepness of the leading flank 13 with regards to the longitudinal axis A. Hereby, and as the flat engagement portion 14' extends along at least a majority of the trailing flank 14, here being defined as along at least 65 % of the thread height H, the first thread 10 is structured to provide a well-balanced distribution with regards to the shear forces (at least the radial force) and the contact area between the flat engagement portion 14' with the flank 24 of the filter housing 1003. Thus, unintentional detachment of the air filter cartridge 1002 from the filter housing 1003, e.g. due to prematurely breakage or prematurely wearing out of the first thread 10, can be avoided or the risk thereof at least reduced. Moreover, an advantageous tight sealing at the trailing flank 14, owing to the contact between the flat engagement portion 14' with the flank 24 of the filter housing 1103, when the air filter cartridge is subject to a pressure from the leading end 1a to the trailing end 1b is achieved. The inventor(s) has/have realized that a suitable inclination β between the flat engagement portion 14' of the trailing flank 14 and the longitudinal axis A is between 42° and 57°, preferably between 43° and 54°, more preferably between 45° and 51°. For example, the inclination β may be at least 42°, or at least 44°, and not more than 50°, or not more than 52°. In the non-limiting example of Fig. 3, the flat engagement portion 14' of the trailing flank 14 is approximately 48°.

Turning to **FIG. 4****,** a cross-sectional view of a portion of an alternative threaded arrangement 101 of air filter cartridge 1002 and an alternative threaded arrangement 101' of the filter housing 1003 are shown. The two threaded arrangements 101, 101' are shown separated from each other for increased comprehensibility, and corresponds in large to the two threaded arrangements 1, 1' of Fig. 3. Like reference numbers are used for like features, but with an additional value of "100" for each feature, i.e. "threaded arrangement 1" of Fig 3 relates to "threaded arrangement 101" of Fig. 4, etcetera.

The threaded arrangement 101 extends from a leading end 101a to a trailing end 101b and comprises a first thread 110 extending helically along the longitudinal axis A from the leading end 101a to the trailing end 101b. The first thread 110 is configured to threadingly engage with a corresponding thread 120 (e.g. a corresponding first thread 120) of the threaded arrangement 101' of the filter housing 1003.

As shown in Fig. 4, the first thread 110 of the threaded arrangement 101 of the air filter cartridge 1002 is built up by structure including a crest 111, a root 112, a pitch p, a thread height H extending in the direction from the root 112 to the crest 111, a leading flank 113 facing the leading end 101a for leading the connection of the air filter cartridge 1002 to the filter housing 1003, and a trailing flank 114 facing the trailing end 101b, the trailing end having a flat engagement portion 114', similar to that of the first thread 10 of the threaded arrangement 1 of Fig. 3, why it is not described in detail here again.

As shown in Fig. 4, the leading flank 113 has a first axial extension d1, the trailing flank 114 has a second axial extension d2, the crest 111, or crest region, has a third axial extension d3 and the root 112, or root region, has a fourth axial extension d4. Corresponding axial distances are included in Fig. 3 as well, but as previously described, the crest 11 and the root 12 are here pointy with a minimum axial extension for the third and fourth axial extensions d3, d4. The sum of the first, second, third and fourth axial extensions d1, d2, d3, d4 is equal to the pitch p. The third axial extension d3 may e.g. be equal to or smaller than 0.25 pitch p, preferably equal to or smaller than 0.15 pitch p, and/or the fourth axial extension d4 may e.g. be equal to or smaller than 0.20 pitch p, preferably equal to or smaller than 0.15 pitch p. In the non-limiting example of Fig. 4, each one of the third and fourth axial extensions d3, d4 is approximately 0.13 pitch p. The third and fourth axial extensions d3, d4 may be equal, or may be different compared to each other.

Correspondingly to the first thread 10 of Fig. 3, and with regards to the pressure P in a direction form the leading end 101a to the trailing end 101b, the steepness of the flat engagement portion 114' of the trailing flank 114 with regards to the longitudinal axis A of the first thread 110 of Fig. 4 is smaller than an average steepness of the leading flank 113 with regards to the longitudinal axis A. Hereby, as for the first thread 10 of Fig. 3, the flat engagement portion 114' extends along at least a majority of the trailing flank 114, here being defined as along at least 65 % of the thread height H, the first thread 110 of Fig. 4 is structured to provide a well-balanced distribution with regards to the shear forces (e.g. the radial force) and the contact area between the flat engagement portion 114' with the flank 124 of the filter housing 1003. Thus, unintentionally detachment of the air filter cartridge 1002 from the filter housing 1003, e.g. due to prematurely breakage or prematurely wearing out of the first thread 110, can be avoided or the risk thereof at least reduced. The inclination β between the flat engagement portion 114' of the trailing flank 114 and the longitudinal axis A may be the same as for the example shown in Fig. 3, i.e. between 42° and 57°, preferably between 43° and 54°, more preferably between 45° and 51°. In the non-limiting example of Fig. 4, the flat engagement portion 114' of the trailing flank 114 is approximately 42°.

With reference to both Fig. 3 and Fig. 4, by arranging the first thread 10, 110 with a steepness of the flat engagement portion 14', 114' of the trailing flank 14, 114 which is smaller than an average steepness of the leading flank 13, 113, the first thread 10, 110 is asymmetrical. Thus, the first thread 10, 110 is different to a metric ISO standard thread. For example, the flat engagement portion 14', 114' of the trailing flank 14, 114 may have an axial extension of at least 0.30 pitch p, preferably at least 0.35 pitch p, more preferably at least 0.40 pitch p.

As shown in Fig. 4, the first thread 110 may be asymmetrically defined by other features than the steepness of the flat engagement portion 114' relative to the average steepness of the leading flank 113. For example, a mid-point m of the crest 111 may be arranged off-set from a position at 0.5 pitch p by at least 0.05 pitch p, preferably by at least 0.10 pitch p. The position of the mid-point m of the crest 111 relative to the pitch p may e.g. be defined with regards to a pitch extending from corresponding mid-points of the two roots 112 surrounding the crest 111. Thus, with such definition, a mid-point of the crest at a position at 0.5 pitch would correspond to a symmetrical crest, at least with regards to the position of the mid-point thereof, which would be the case for a metric ISO standard thread. By arranging the mid-point m of the crest 111 off-set with regards to the position at 0.5 pitch p, an asymmetrically for the first thread 110 is achieved which facilitates the structure of having a less steep flat engagement portion 114' of the trailing flank 114 compared to the average steepness of the leading flank 113. As shown in Fig. 4, the mid-point m of the crest 111 is offset relative to a position at 0.5 pitch p by approximately 0.20 pitch p.

As shown both in Fig. 3 and Fig. 4, the second axial extension d2 is larger than the first axial extension d1. Thus, the trailing flank 14, 114 extends along the longitudinal axis A for a larger distance as compared to the leading flank 13, 113. Hereby, an advantageous structure for providing a flat engagement portion 14', 114' of the trailing flank 14, 114 which is less steep compared to the average steepness of the leading flank 13, 113 with regards to the longitudinal axis A is achieved.

For example, the sum of the first axial extension d1, half of the third axial extension d3 and half of the fourth axial extension d4 is smaller than 0.5 pitch p, preferably smaller than 0.45 pitch p or smaller than 0.35 pitch p and the sum of the second axial extension d2, half of the third axial extension d3 and half of the fourth axial extension d4 is larger than 0.5 pitch p, preferably larger than 0.55 pitch p or larger than 0.65 pitch p. As shown in both Fig. 3 and Fig. 4, the second axial extension d2 is at least twice as large as the first axial extension d1, and as shown in Fig. 4, the second axial extension d2 may even be three times as large as the first axial extension d1.

With reference to both Fig. 3 and Fig. 4, the average steepness of the leading flank 13, 113 may be between 63° and 87°, preferably between 67° and 85°, more preferably between 71° and 81° with regards to the longitudinal axis A, indicated by the angle α. Stated differently, the average steepness of the leading flank 13, 113 may be between 6° and 45°, preferably between 13° and 42°, more preferably between 20° and 39° steeper than the flat engagement portion 14', 114' of the trailing flank 14, 114. In the non-limiting example of Fig. 3, the average steepness of the leading flank 13 is approximately 72°, and in the non-limiting example of Fig. 4, the average steepness of the leading flank 113 is approximately 70°. The average steepness of the leading flank 13, 113 is typically defined as the average inclination of the leading flank 13 relative to the longitudinal axis A, from the crest 11, 111 to the root 12, 112. For example, with reference to the first crest 11a and the first root 12a of Fig. 3, the average steepness of the first leading flank 13a may be determined from the first crest 11a to the first root 12a.

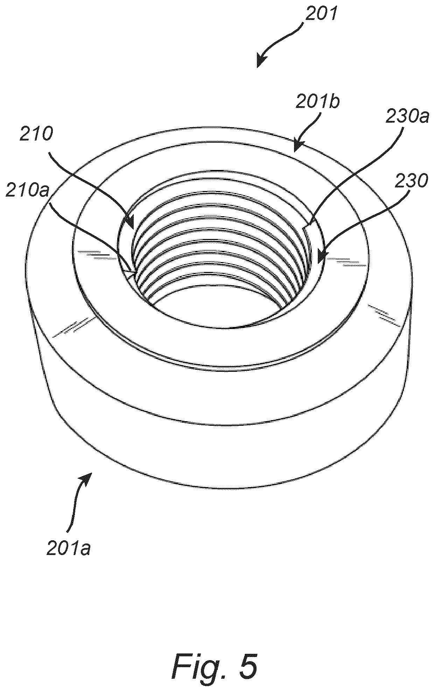

Turning to Fig. 5, showing an alternative example of a threaded arrangement 201 of the air filter cartridge 1002. Thus, the air filter cartridge 1002 may be provided with threaded arrangement 201 instead of the threaded arrangement 1 of Fig. 3, or the threaded arrangement 101 of Fig. 4. The threaded arrangement 201 is a multi-screw thread arrangement 201 comprising a first thread 210 and a second thread 230 extending helically along a longitudinal axis A from a leading end 201a to a trailing end 201b. The first thread 210 may correspond to, or be the same as, to the first thread 10 of the example in Fig. 3 or of the first thread 110 of the example in Fig. 4. The second thread 230 is arranged offset compared to the first thread 210. The second thread 230 may be offset relative to the first thread 210 by a predefined value, e.g. by 180°. Thus, the start 210a of the first and second thread 210 and the start 230a of the second thread 230 may be offset by a correspondingly predefined value, e.g. by 180° as shown in Fig. 5..

The second thread 230 may be correspondingly shaped to the first thread 210, or may be shaped differently to the first thread 210. Thus, the second thread 230 may extend from the leading end 201a to the trailing end 201b in a corresponding manner as the first thread 210. Thus, the first thread 210 and the second thread 230 may be correspondingly shaped.

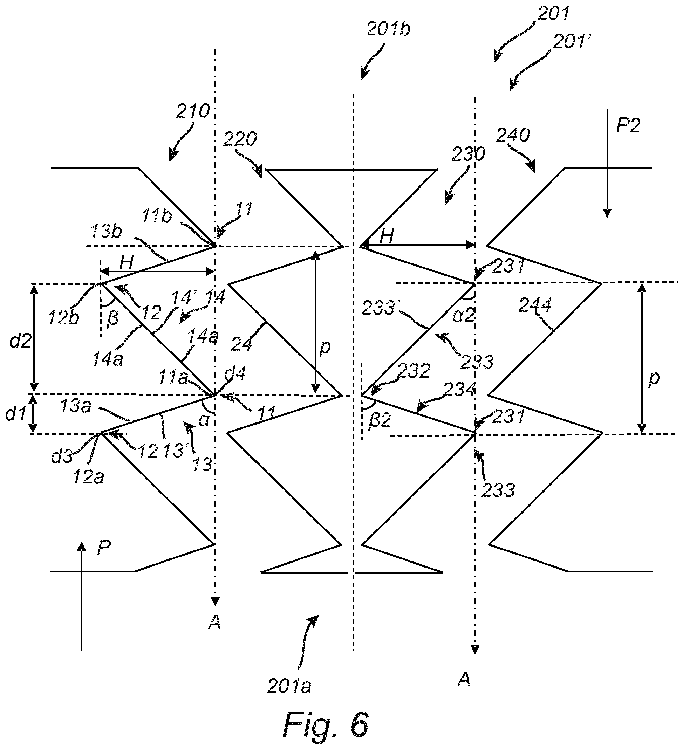

In the case the second thread 230 is differently shaped compared to first thread 210, the second thread 230 may be provided with a similar threaded structure but with opposite features for the trailing and leading flanks. Such threaded structure is shown in **FIG. 6****,** wherein a cross-sectional view of a portion of the threaded arrangement 201 comprising the first thread 210 and a threaded arrangement 201' of the filter housing 1003 comprising a corresponding first thread 220 is shown to the left, and a cross-sectional view of a portion of the threaded arrangement 201 comprising the second thread 230 and the threaded arrangement 201' comprising a corresponding second thread 240 is shown to the right. The first thread 210 of the threaded arrangement 201 is configured to threadingly engage with the first thread 220 of the filter housing 1003 in a corresponding manner as described with reference to Fig. 3 and Fig. 4, and is thus not described in detail here again. Thus, the reference numerals of the first thread 210 is corresponding to those of the first thread 10 of Fig. 3. The second thread 230 of the threaded arrangement 201 is configured to threadingly engage with the second thread 240 of the filter housing 1003. The first threads 210, 220 of the two threaded arrangements 201, 201', and the second threads 230, 240 of the two threaded arrangements 201, 201', are shown separated from each other for increased comprehensibility.

The second thread 230 comprises a crest 231, a root 232, a pitch p, a thread height H extending in the direction from the root 232 to the crest 231, a leading flank 233 facing the leading end 201a for leading the connection and having a flat contacting portion 233', and a trailing flank 234 facing the trailing end 201b. As shown in Fig. 5, a steepness of the flat contacting portion 233' of the leading flank 233 with regards to the longitudinal axis A is smaller than an average steepness of the trailing flank 233 with regards to the longitudinal axis A, the flat contacting portion 233' extending along at least 65 % of the thread height H and being inclined α2 between 42° and 57°, preferably between 43° and 54°, more preferably between 45° and 51° with regards to the longitudinal axis A. Thus, effects and features related to the second thread 230 of the threaded arrangement 201 are largely analogous to those described above in connection with the first thread 10, 110 but for an applied pressure P2 in the opposite direction to that described with reference to Fig.3 and Fig. 4, i.e. a pressure P2 from the trailing end 201b to the leading end 201a. Thus, threaded arrangements 201, 201' will seal the air filter cartridge 1002 to the filter housing 1003 regardless of the direction of the pressure. As shown in the examples of Fig. 3 and Fig. 4, the leading flank 13, 113 may comprise a corresponding flat contacting portion 13', 113'.

In any of the examples described herein, a play of 0.001 to 0.1 pitch p may be present at least between the first thread 10, 110, 210 of the air filter cartridge 1002 and the thread 20, 120, 220 of the filter housing 1003. For example, the play my be present between the corresponding root and crest pair 11, 111, 231 12, 112, 232 of the first thread 10, 110, 210 of the air filter cartridge 1002 and the thread 20, 120, 220 of the filter housing 1003.

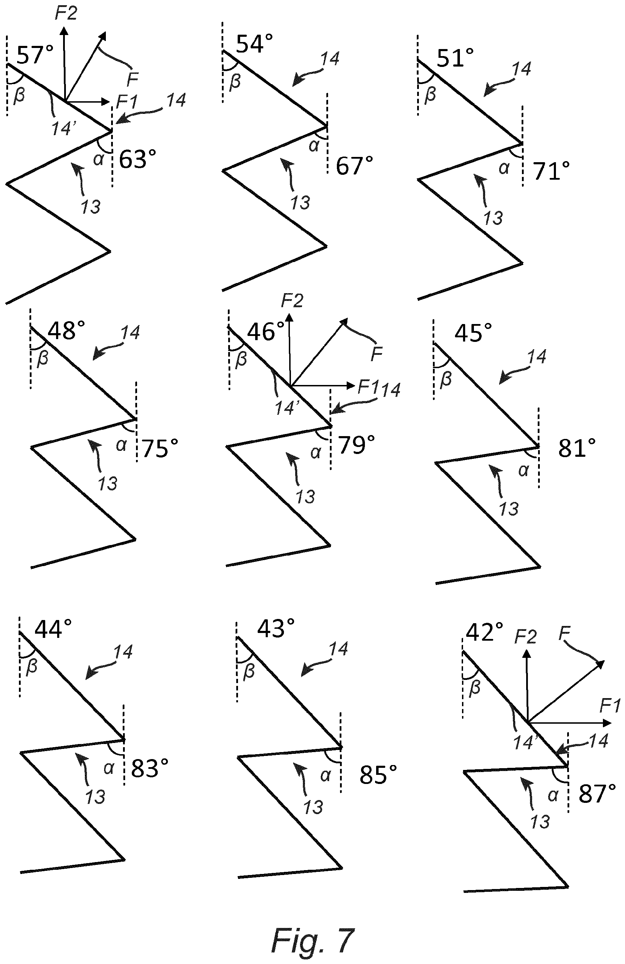

**FIG.** 7 shows various alternatives of the inclination of the flat engagement portion 14' and the average steepness (or average inclination) of the leading flank 13, with reference to the first thread 10 of the threaded arrangement 1 described with reference to Fig. 3. All of the examples shown in Fig. 7 are example embodiments.

From the left to right and top to bottom, the inclination β between the flat engagement portion 14' of the trailing flank 14 and the longitudinal axis A is decreasing from 57° to 42° while the inclination α (average inclination corresponding to the average steepness) of the leading flank 13 and the longitudinal axis A is increasing from 63° to 87°. With reference to the example in the top left corner, the shear forces F are indicated, the shear forces F being present when a pressure P is applied from the leading end 1a to the trailing end 1b resulting in that the flat engagement portion 14' is brought into contact with the corresponding flank 24 of the filter housing 1003 as previously described. The radial component of the shear forces F is indicated by F1, and the vertical component of the shear forces F is indicated by F2. As is clear from Fig. 7, the radial component F1 of the shear forces F increases with decreasing inclination β, and increasing inclination α (the shear forces F, F 1, F2 are only shown in the example in the top left corner, the middle example in the middle, and the example in the bottom right corner, but is considered implicitly included for the other examples). The vertical component F2 of the shear forces F remains constant in the examples of Fig. 7. An increased radial force F1 typically corresponds to an increased stress on the thread 10. Thus, it is preferred to keep the radial force F 1 low. However, as is also clear from Fig. 7, the size of the flat engagement portion 14', and hence the contact area between the flat engagement portion 14' and the corresponding flank 24 of the filter housing 1003, increases with increasing inclination β, and decreasing inclination α. An increased size of the flat engagement portion 14' (and increased associated contact area) typically corresponds to an increased sealing effect. Thus, it is preferred to have a large flat engagement portion 14'.

Therefore, the choice of at least the inclination β between the flat engagement portion 14' of the trailing flank 14 and the longitudinal axis A is important. The inventors have realized that a well-balanced distribution with regards to the radial force F1 of the shear forces F on one hand, and the size of the flat engagement portion 14' (and associated contact area between the flat engagement portion 14' and the thread 24 of the filter housing 1003) on the other hand, is achieved for an inclination β between 42° and 57°, which is further improved for an inclination β between 43° and 54°, and even further improved for an inclination β between 45° and 51°, e.g. between 46° and 48°. Thus, the stress of the thread 10 is kept relatively low, while simultaneously providing a tight sealing at the trailing flank 14 when being subject to a pressure from the leading end 1a to the trailing end 1b.

As also shown in Fig. 7, the combined axial distance of the trailing flank 14 and the leading flank 13 is equal for all of the examples in Fig. 7. Thus, as the inclination β between the flat engagement portion 14' of the trailing flank 14 and the longitudinal axis A is decreasing, the inclination α of the leading flank 13 is increasing from 63° to 87°. Therefore, the shear section for all of the examples in Fig. 7 is the same.

Example 1. An air filter cartridge comprising a filter body and a threaded arrangement for connection with a thread of a filter housing, the threaded arrangement having a leading end, a trailing end opposite to the leading end and at least a first thread extending helically along a longitudinal axis from the leading end to the trailing end, the first thread having a crest, a root, a pitch, a thread height extending in the direction from the root to the crest, a leading flank facing the leading end for leading the connection, and a trailing flank facing the trailing end and having a flat engagement portion, wherein a steepness of the flat engagement portion of the trailing flank with regards to the longitudinal axis is smaller than an average steepness of the leading flank with regards to the longitudinal axis, the flat engagement portion extending along at least 65 % of the thread height and being inclined between 42° and 57°, preferably between 44° and 54°, more preferably between 45° and 51° with regards to the longitudinal axis.

Example 2. The air filter cartridge of example 1, wherein the root is defined as the first 10 % of the thread height and the crest is defined as the last 10 % of the thread height, wherein the trailing flank is defined to extend from the root to the crest along 80 % of the thread height.

Example 3. The air filter cartridge of example 2, wherein a mid-point of the crest is arranged off-set from a position at 0.5 pitch by at least 0.05 pitch, preferably by at least 0.10 pitch.

Example 4. The air filter cartridge of any of examples 1-3, wherein the flat engagement portion of the trailing flank has an axial extension of at least 0.30 pitch, preferably at least 0.35 pitch, more preferably at least 0.40 pitch.

Example 5. The air filter cartridge of any of examples 1-4, wherein the leading flank has a first axial extension, the trailing flank has a second axial extension, the crest has a third axial extension and the root has a fourth axial extension, wherein the sum of the first, second, third and fourth axial extensions is equal to the pitch.

Example 6. The air filter cartridge of example 5, wherein the second axial extension is larger than the first axial extension.

Example 7. The air filter cartridge of any of examples 5-6, wherein the sum of the first axial extension, half of the third axial extension and half of the fourth axial extension is smaller than 0.5 pitch, preferably smaller than 0.45 pitch or smaller than 0.35 pitch and the sum of the second axial extension, half of the third axial extension and half of the fourth axial extension is larger than 0.5 pitch, preferably larger than 0.55 pitch or larger than 0.65 pitch.

Example 8. The air filter cartridge of any of examples 5-7, wherein the third axial extension is equal to or smaller than 0.25 pitch, preferably equal to or smaller than 0.15 pitch, and/or the fourth axial extension is equal to or smaller than 0.20 pitch, preferably equal to or smaller than 0.15 pitch.

Example 9. The air filter cartridge of any of examples 1-8, wherein the average steepness of the leading flank is between 6° and 45°, preferably between 13° and 42°, more preferably between 20° and 39° steeper than the flat engagement portion of the trailing flank.

Example 10. The air filter cartridge of any of examples 1-9, wherein the leading flank extends from a first crest to a first root, and the trailing flank extends from the first crest to a second root trailing the first root in the axial direction, and wherein the average steepness of the leading flank is determined from the first crest to the first root.

Example 11. The air filter cartridge of any of examples 1-10, wherein the average steepness of the leading flank is between 63° and 87°, preferably between 67° and 85°, more preferably between 71° and 81° with regards to the longitudinal axis.

Example 12. The air filter cartridge of any of examples 1-11, wherein the flat engagement portion of the trailing flank forms an engagement surface for a corresponding flank of the thread of the filter housing.

Example 13. The air filter cartridge of example 12, wherein the engagement surface of the trailing flank is configured to be brought into contact with the corresponding flank of the thread of the filter housing when the air filter device is subject to a pressure in a direction from the leading end to the trailing end.

Example 14. The air filter cartridge of any of examples 1-13, wherein the threaded arrangement is a multi-screw thread arrangement further comprising a second thread extending helically along the longitudinal axis from the leading end to the trailing end offset compared to the first thread, and wherein the second thread is correspondingly shaped to the first thread, or is shaped differently to the first thread.

Example 15. The air filter cartridge of example 14, wherein the second thread comprises a crest, a root, a pitch, a thread height extending in the direction from the root to the crest, a leading flank facing the leading end for leading the connection and having a flat contacting portion, and a trailing flank facing the trailing end, wherein a steepness of the flat contacting portion of the leading flank with regards to the longitudinal axis is smaller than an average steepness of the trailing flank with regards to the longitudinal axis, the flat contacting portion extending along at least 65 % of the thread height and being inclined between 42° and 57°, preferably between 43° and 54°, more preferably between 45° and 51° with regards to the longitudinal axis.

Example 16. An air filter system comprising a filter housing and an air filter cartridge according to any one of examples 1-15.

Example 17. The air filter system of example 16, wherein a play of 0.001 to 0.1 pitch is present at least between the first thread of the air filter cartridge and the thread of the filter housing.

Example 18. A vehicle comprising the air filter system of any of examples 16-17, or an air filter cartridge of any of examples 1-15.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. An air filter cartridge (1002) comprising a filter body (1002a) and a threaded arrangement (1, 101, 201) for connection with a thread (20, 120, 220) of a filter housing (1003), the threaded arrangement (1, 101, 201) having a leading end (1a, 101a, 201a), a trailing end (1b, 101b, 201b) opposite to the leading end (1a, 101a, 201a) and at least a first thread (10, 110, 210) extending helically along a longitudinal axis (A) from the leading end (1a, 101a, 201a) to the trailing end (1b, 101b, 201b), the first thread having a crest (11, 111), a root (12, 112), a pitch (p), a thread height (H) extending in the direction from the root (12, 112) to the crest (11, 111), a leading flank (13, 113) facing the leading end (1a, 101a, 201a) for leading the connection, and a trailing flank (14, 114) facing the trailing end (1, 101b, 201b) and having a flat engagement portion (14', 114'),
wherein a steepness of the flat engagement portion (14', 114') of the trailing flank (14, 114) with regards to the longitudinal axis (A) is smaller than an average steepness of the leading flank (13, 113) with regards to the longitudinal axis (A), the flat engagement portion (14', 114') extending along at least 65 % of the thread height (H) and being inclined (β) between 42° and 57°, preferably between 43° and 54°, more preferably between 45° and 51° with regards to the longitudinal axis (A).

2. The air filter cartridge (1002) of claim 1, wherein the root (12, 112) is defined as the first 10 % of the thread height (H) and the crest (11, 111) is defined as the last 10 % of the thread height (H), wherein the trailing flank (14, 114) is defined to extend from the root (12, 112) to the crest (11, 111) along 80 % of the thread height (H).

3. The air filter cartridge (1002) of claim 2, wherein a mid-point (m) of the crest (11, 111) is arranged off-set from a position at 0.5 pitch by at least 0.05 pitch (p), preferably by at least 0.10 pitch (p).

4. The air filter cartridge (1002) of any of claims 1-3, wherein the flat engagement portion (14', 114') of the trailing flank (14, 114) has an axial extension of at least 0.30 pitch (p), preferably at least 0.35 pitch (p), more preferably at least 0.40 pitch (p).

5. The air filter cartridge (1002) of any of claims 1-4, wherein the leading flank (13, 113) has a first axial extension (d1), the trailing flank (14, 114) has a second axial extension (d2), the crest (11, 111) has a third axial extension (d3) and the root (12, 112) has a fourth axial extension (d4), wherein the sum of the first, second, third and fourth axial extensions (d1, d2, d3, d4) is equal to the pitch (p).

6. The air filter cartridge (1002) of claim 5, wherein the second axial extension is larger than the first axial extension.

7. The air filter cartridge (1002) of any of claims 5-6, wherein the sum of the first axial extension (d1), half of the third axial extension (d3) and half of the fourth axial extension (d4) is smaller than 0.5 pitch (p), preferably smaller than 0.45 pitch (p) or smaller than 0.35 pitch (p) and the sum of the second axial extension (d2), half of the third axial extension (d3) and half of the fourth axial extension (d4) is larger than 0.5 pitch (p), preferably larger than 0.55 pitch (p) or larger than 0.65 pitch (p).

8. The air filter cartridge (1002) of any of claims 5-7, wherein the third axial extension (d3) is equal to or smaller than 0.25 pitch (p), preferably equal to or smaller than 0.15 pitch (p), and/or the fourth axial extension (d4) is equal to or smaller than 0.20 pitch (p), preferably equal to or smaller than 0.15 pitch (p).

9. The air filter cartridge (1002) of any of claims 1-8, wherein the average steepness of the leading flank (13, 113) is between 6° and 45°, preferably between 13° and 42°, more preferably between 20° and 39° steeper than the flat engagement portion (14', 114') of the trailing flank (14, 114).

10. The air filter cartridge (1002) of any of claims 1-9, wherein the average steepness of the leading flank (13, 113) is between 63° and 87°, preferably between 67° and 85°, more preferably between 71° and 81° with regards to the longitudinal axis (A).

11. The air filter cartridge (1002) of any of claims 1-10, wherein the flat engagement portion (14', 114') of the trailing flank (14, 114) forms an engagement surface for a corresponding flank (24, 124) of the thread (20, 120) of the filter housing (1003), and wherein the engagement surface of the trailing flank (114) is configured to be brought into contact with the corresponding flank (24, 124) of the thread (20) of the filter housing (1003) when the air filter device (1002) is subject to a pressure (P) in a direction from the leading end (1a, 101a, 201a) to the trailing end (1b, 101b, 201b).

12. The air filter cartridge (1002) of any of claims 1-11, wherein the threaded arrangement (201) is a multi-screw thread arrangement (201) further comprising a second thread (230) extending helically along the longitudinal axis (A) from the leading end (201a) to the trailing end (201b) offset compared to the first thread (210), and wherein the second thread (230) is correspondingly shaped to the first thread (210), or is shaped differently to the first thread (210).

13. The air filter cartridge (1002) of claim 12, wherein the second thread (230) comprises a crest (231), a root (232), a pitch (p), a thread height (H) extending in the direction from the root (232) to the crest (231), a leading flank (233) facing the leading end (201a) for leading the connection and having a flat contacting portion (233'), and a trailing flank (234) facing the trailing end (201b), wherein a steepness of the flat contacting portion (233') of the leading flank (233) with regards to the longitudinal axis (A) is smaller than an average steepness of the trailing flank (233) with regards to the longitudinal axis (A), the flat contacting portion (233') extending along at least 65 % of the thread height (H) and being inclined (α2) between 42° and 57°, preferably between 43° and 54°, more preferably between 45° and 51° with regards to the longitudinal axis (A).

14. An air filter system (1001) comprising a filter housing (1003) and an air filter cartridge (1002) according to any one of claims 1-13.

15. A vehicle (1) comprising the air filter system (1001) of claim 14, or an air filter cartridge of any of claims 1-13.
